# EUROPEAN PATENT SPECIFICATION

(11) **EP 0 466 490 B1**
(45) Date of publication and mention of the grant of the patent: **05.06.1996**
(21) Application number: 91306310.3
(22) Date of filing: 11.07.1991
(51) Int. Cl.: G02B 6/06, B07C 5/342, G01N 23/223, G01N 21/85, G01N 21/25, B07C 5/34

(54) **Fibre optic interrogation system**
Faseroptik verwendende Abfragevorrichtung
Système d'interrogation à fibres optiques

(30) Priority: 11.07.1990 ZA 905427
(43) Date of publication of application: 15.01.1992
(73) Proprietor: DE BEERS INDUSTRIAL DIAMOND DIVISION (PROPRIETARY) LIMITED, Johannesburg, Transvaal (ZA)
(72) Inventor: Potgieter, Johannes Hermanius, Zevenfontein, Transvaal (ZA); Hammond, David James, Discovery, Florida, Transvaal (ZA); Speedy, John Oliver, Robin Hills, Randburg, Transvaal (ZA)
(74) Representative: Senior, Alan Murray

(56) References cited:
- EP-A- 0 195 375
- EP-A- 0 341 094
- DE-A- 1 931 273
- GB-A- 1 412 771
- GB-A- 2 040 057
- GB-A- 2 211 931
- US-A- 4 560 235

## Description

**THIS** invention relates to a fibre optic interrogation system.

One possible application of the invention is in particle sorting, typically diamond sorting. Conventional diamond X-ray sorters have a conveyor belt which causes particles that are to be sorted to move through an excitation zone, a detection zone and a sorting zone. In the excitation zone, the particles are subjected to X-radiation. In the detection zone, luminescence of diamond particles is detected and in the sorting zone, the luminescing particles are separated from other, non-luminescing particles. The particles may fall sequentially through the detection and sorting zones after they have been projected in a falling stream from the end of the conveyor belt. Photomultiplier tubes (PMTs) and fluid blast ejectors are usually used for detection of luminescing particles and for ejection of such particles respectively.

Usually the particles are arranged in a wide monolayer on the belt with a number of particles across the width of the belt. To ensure accurate detection and sorting, it is important for the sorting apparatus to have the capability of detecting luminescence in small width zones only of the moving stream of particles. If, for instance, a PMT "sees" too great a width of the particle stream, non-luminescing particles may be collected along with luminescing particles. Similarly, if the fluid blast ejector blasts too great a width of the particle stream, non-luminescing particles may be collected.

It has already been proposed in GB-A-2,211,931 to provide a series of optical fibres, each of which is arranged to pick up luminescence from a narrow width portion only of the particle stream. The fibres are then interrogated to determine which of them carries light from a luminescing particle and accordingly the width portion of the stream that the light emanated from. Even with this system, the problem has been encountered that an optical fibre may pick up light from a luminescing particle in an adjacent width portion of the stream, leading to the possibility of a spurious identification of the width portion that in reality contains the luminescing particle.

Another possible application of the invention is in security scanning. For instance, in the diamond industry security is a major problem because of the small size of the average gem diamond and the ease with which it can be concealed in or on the person, and stolen. It has been proposed to subject persons leaving a diamond installation to X-radiation and then to form an X-ray image of the person. On such an image, the presence of a diamond would be readily detectable. In this kind of situation it is important to be able to form an accurate image and hence to be able to identify correctly the location of any diamonds which the person may be concealing.

According to the present invention there is provided a fibre optic interrogation system for enabling the detection of radiation which may emanate from particular zones, comprising a plurality of collection fibres, a first end of each collection fibre being arranged to collect radiation from a particular zone and the second, opposite ends of the collection fibres being arranged in a pattern that permits such second ends to be interrogated individually for radiation transmission by the relevant collection fibre, the system further comprising interrogation means for successively interrogating adjacent second ends of the collection fibres, characterised in that collection fibres which have their first ends adjacent to one another have their second ends in non-adjacent positions in the pattern.

In one version of the invention, the second ends of the collection fibres are arranged in a circular pattern, those collection fibres which have adjacent first ends having their second ends displaced angularly apart from one another in the circular pattern. Conveniently, those collection fibres which have adjacent first ends have their second ends in approximately diametrically opposed relationship in the circular array.

In another version of the invention, the second ends of the collection fibres are arranged in a pattern composed of two or more circles, those collection fibres which have adjacent first ends having their second ends staggered with respect to one another in different circles.

In either version of the invention, the first ends of the collection fibres may be arranged in a straight line. Typically, the straight line extends transversely across the width of a conveyor which in use conveys particulate material that is to be sorted, so that each first end picks up radiation emanating from a small width zone only of the conveyor.

Alternatively, the first ends of the collection fibres may be arranged in an array designed for each first end to pick up radiation emanating from a small zone only of a person's body.

Preferably, the system of the invention comprises interrogation means to interrogate the second ends of the fibres. The interrogation means may comprise at least one interrogation fibre which has a first end movable in a circular path past the second ends of the collection fibres so as to collect radiation transmitted by the collection fibres and a second, opposite end arranged to direct such radiation to a suitable radiation detector.

There may be two interrogation fibres. In the case where the second ends of the collection fibres are arranged in a circle, the two interrogation fibres may have their first ends angularly displaced from one another so as to interrogate angularly spaced collection fibre second ends. In the case where the second ends of the collection fibres are in two or more circles, the interrogation fibres are spaced apart at the same radial orientation and are arranged to interrogate collection fibre second ends which are in different circles. In either case, the interrogation fibres may be arranged to direct radiation to a different detector.

Typically, each radiation detector is a light detector for detecting light transmitted by the collection fibres. In this case, the system of the invention may be used to detect diamonds which luminesce as a result of incident X-radiation. The system can be used in a diamond sorting apparatus.

The invention will now be described in more detail, by way of example only, with reference to the accompanying drawings in which:
- **Figure 1**: shows a diagrammatic side view of a fibre optic interrogation apparatus of the invention;
- **Figure 2**: shows a diagrammatic, partially cross-sectioned view of the same apparatus looking in a direction at right angles to the view in Figure 1;
- **Figure 3**: shows a diagrammatic side view of relevant parts of a second embodiment; and
- **Figure 4**: shows a partial, developed view of the internal surface of the drum wall in the embodiment of Figure 3.

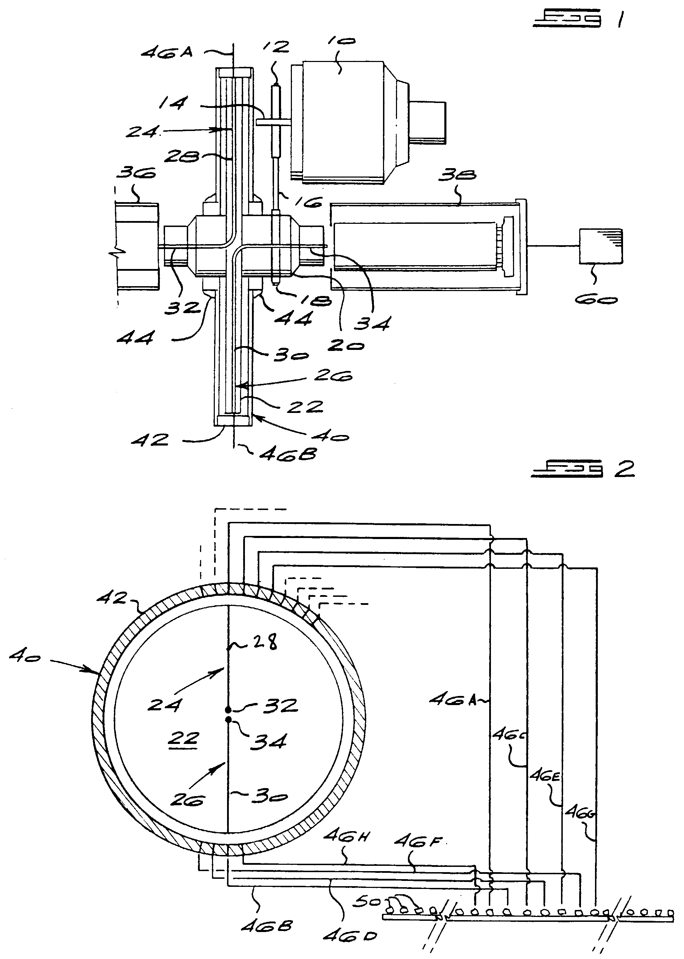

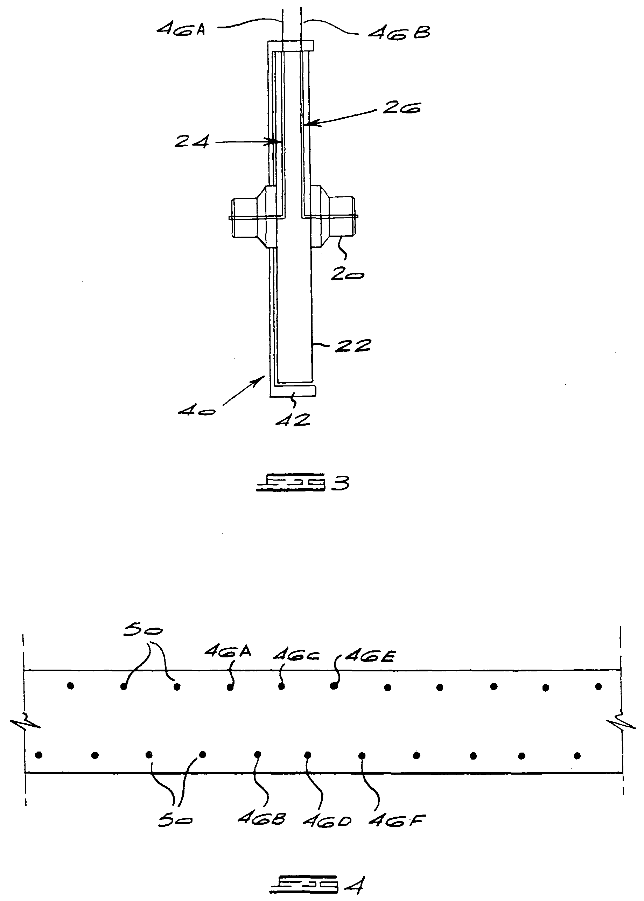

In the first embodiment illustrated in Figures 1 and 2 there is a motor 10 carrying a pulley 12 on its output shaft 14. A belt 16 passes around the pulley 12 and about a further pulley 18 on a shaft 20 carrying a circular disc 22.

Optical interrogation fibres 24 and 26 have radially extending portions 28 and 30 respectively, and axially extending portions 32 and 34 respectively. The portions 28 and 30 are located within the thickness of the disc 22 while the portions 32 and 34 are located within the shaft 20. The outer extremities of the portions 28 and 30 are exposed at the circumference of the disc 22 while the extremities of the portions 32 and 34 are located close to respective PMTs 36 and 38. The portions 28 and 30 of the fibres 24 and 26 are displaced from one another in this embodiment by 180°.

With the motor 10 running, the disc 22 rotates with the shaft 20 and the outer extremities of the portions 28 and 30 of the fibres 24 and 26 describe a circular path, 180° out of phase with one another.

located about the disc 22 is a drum 40 having a circular drum wall 42. Bearings 44 are located between the shaft 20 and the drum which remains stationary as the disc rotates.

Optical collection fibres are connected at angularly spaced locations to the drum wall 42, with their inner ends exposed inside the drum. Figure 1 only shows two of the collection fibres 46A and 46B, but it will be appreciated that there are many such fibres in the apparatus. Figure 2 shows a greater number of such fibres, but for clarity of illustration, many of the fibres which would actually be present in practice are omitted.

As illustrated in figures 1 and 2, the apparatus has application in the sorting of diamonds and diamondiferous particles from rock particles. In this case, the opposite ends of the fibres 46A, 46B etc are arranged in a straight line extending transversely to a moving stream of diamond and rock particles 50 which have been subjected to X-radiation. In the straight line, the ends of the fibres 46A, 46B etc are equispaced from one another. Each of the fibres "views" a small width portion only of the stream of particles, with the full complement of fibres effectively viewing the whole width of the srtream. As viewed in Figure 2, the stream of particles 50 is moving into the plane of the paper.

Referring to figure 2, it will be seen that fibres 46A, 46B etc which have adjacent ends adjacent the stream of particles 50 have their drum ends at least approximately diametrically opposed. The drum end of the fibre 46B, for instance, is diametrically opposed to the drum end of the fibre 46A, and substantially diametrically opposed to the drum end of the other adjacent fibre 46C. Clearly the arrangement is such that the drum ends of those fibres which are adjacent in the straight line are remote from one another.

In operation, when a luminescing i.e diamond particle passes by the end of a fibre 46A, 46B etc, that fibre picks up the light from the particle and conveys it, by normal internal reflection, to the drum wall 42. The light which is emitted by the end of the fibre into the drum is picked up by an optical interrogation fibre 24 or 26 and is conveyed by internal reflection to the relevant PMT 36 or 38 which detects the light. The signal from the PMT is fed to associated processor 60 which also receives signals from the motor 10.

The processor 60 is able to determine, from the light detection signals and the signals received from the motor 10, the rotational position of the disc 22 and accordingly is able to determine the identity of the collection fibre 46A, 46B etc which conveyed the light to the drum. Having determined the identity of the fibre 46A, 46B etc, the processor can determine the identity of the width portion of the stream of particles 50 that the light originally emanated from.

Thus the end result is that the apparatus determines what width portion of the stream of particles 50 contains a luminescing i.e. diamond particle.

At a downstream location there is a separator (not shown), typically one including a bank of air blast ejector, one for each width portion of the stream of particles. In response to a command from the processor 60, the appropriate one of the air blast ejectors is actuated at the appropriate moment to issue an air blast at the appropriate width portion of the stream. This ejects the relevant particle out of the stream for collection apart from other non-ejected particles, i.e. non-diamond particles.

The embodiment of Figures 3 and 4 differs from that of Figures 1 and 2 in that collection fibres 46A, 46B etc which have adjacent ends viewing adjacent width portions of the stream of particles 50 have their drum ends staggered on two circles spaced axially apart from one another. Referring to Figure 4, and assuming that the collection fibres are arranged, at the stream end, in a sequential pattern 46A, 46B, 46C and so on, it will be seen that the drum ends of the fibres are in two circles. One circle contains the drum ends of the fibres 46A, 46C, 46E and so on, while the other circle contains the drum ends of the fibres 46B, 46D, 46F and so on. The fibre ends in the two circles are staggered with respect to one another. Thus at the drum end, the fibre 46B is not adjacent to the fibre 46A or the fibre 46C and so on. In the embodiment of Figures 3 and 4, the interrogation fibres are at the same radial positions, but are spaced axially from one another. As in the first embodiment, each is arranged to convey light to a different PMT. Thereafter, the sorting procedure is as for the first embodiment.

An important feature of the invention as exemplified above is the fact that fibres which are adjacent to one another at the stream end are non-adjacent at the drum end. This in turn means that the fibre ends which are interrogated in close sequence do not emanate from adjacent width portions of the stream of particles. Thus even if two collection fibres which are adjacent to one another at the stream end both pick up light from one width portion of the stream, the relevant interrogation fibre will only pick up light from one of them at the appropriate moment in time. Thus the likelihood of spurious actuation of the separation apparatus is reduced.

In either embodiment the actual entry positions of the drum ends of the collection fibres can be varied, the critical point being that fibres which arc adjacent at the stream end should not be adjacent at the drum end. The further apart the drum ends of the collection fibres, the less the likelihood of an inaccurate sort taking place.

With a view to further improvement of the accuracy of the sort, it is proposed to texture or otherwise treat the outer surface of the disc 22 in such a way that it absorbs light rather than reflecting it. This will reduce the chances of scattered light from another collection fibre being picked up by an interrogation fibre when the interrogation fibre is not actually interrogating that other collection fibre.

Another important feature of the invention as exemplified is the fact that there are two interrogation fibres continuously at work, thereby speeding up the width portion determination.

As indicated previously, the invention is not limited in its application to diamond sorting. Another important application of the principles of the invention is in X-ray imaging, particularly for security purposes in a diamond installation, such as a diamond mine or gemstone cutting works.

In order to form an image of the person, and thereby detect the presence of diamonds on the person's body, the person is made to stand between an X-ray source and an array of collection fibres. The array is designed such that the ends of the collection fibres, corresponding to the stream ends of the collection fibres 46 in the drawings, are each able to pick up transmitted radiation from a small zone only of the person's body. The radiation that is collected is then transmitted internally by the collection fibres to the drum ends of the fibres, as in the drawings.

In exactly the same manner as described above in relation to the drawings, the drum ends of the collection fibres are interrogated by the interrogation fibres. The associated processor processes the signals from the PMTs and produces a visual, composite X-ray image of the person's body. On this image the presence on the body of any diamond will be readily detectable. Thus a viewer of the image will be able to determine rapidly whether the image is indicative of the presence of a diamond. In addition, be will be able to determine the location on the image, and accordingly on the person, of the diamond.

Once again, because those collection fibres which have collection ends that are adjacent in the fibre array have their drum ends in non-adjacent locations, the accuracy of the interrogation and resultant image is improved.

## Claims

1. A fibre optic interrogation system for enabling the detection of radiation which may emanate from particular zones, comprising a plurality of collection fibres (46), a first end of each collection fibre (46) being arranged to collect radiation from a particular zone and the second, opposite ends of the collection fibres (46) being arranged in a pattern that permits such second ends to be interrogated individually for radiation transmission by the relevant collection fibre (46), the system further comprising interrogation means (24,26) for successively interrogating adjacent second ends of the collection fibres, characterised in that collection fibres (46) which have their first ends adjacent to one another have their second ends in non-adjacent positions in the pattern.

2. A fibre optic interrogation system according to claim 1, wherein the second ends of the collection fibres (46) are arranged in a circular pattern, those collection fibres (46) which have adjacent first ends having their second ends displaced angularly apart from one another in the circular pattern.

3. A fibre optic interrogation system according to claim 2, wherein those collection fibres (46) which have adjacent first ends have their second ends in approximately diametrically opposed relationship in the circular pattern.

4. A fibre optic interrogation system according to claim 1, wherein the second ends of the collection fibers (46) are arranged in a pattern composed of two or more circles, those collections fibres (46) which have adjacent first ends having their second ends staggered with respect to one another in different circles.

5. A fibre optic interrogation system according to any one of the preceding claims, wherein the first ends of the collection fibres (46) are arranged in a straight line.

6. A fibre optic interrogation system according to claim 5 in combination with a conveyor, wherein the first ends of the collection fibres (46) are arranged in a straight line extending transversely across the width of the conveyor so that said particular zone associated with each collection fibre (46) is a small width zone only of the conveyor, the conveyor being arranged to, in use, convey particulate material (50) that is to be sorted.

7. A fibre optic interrogation system according to any one of the preceding claims, wherein the interrogation means comprises at least one interrogation fibre (24,26) which has a first end movable in a circular path past the second ends of the collection fibres (46) so as to collect radiation transmitted by the collection fibres and a second, opposite end arranged to direct such radiation to a suitable radiation detector (36,38).

8. A fibre optic interrogation system according to claim 7, the interrogation means comprising two interrogation fibres (24,26).

9. A fibre optic interrogation system according to claim 8 when dependent on claim 2, wherein the two interrogating fibres (24,26) have their first ends angularly displaced from one another so as to interrogate angularly spaced collection fibre second ends.

10. A fibre optic interrogation system according to claim 8 when dependent on claim 4, wherein the interrogation fibres (24,26) are spaced apart at the same radial orientation and are arranged to interrogate collection fibre second ends which are in different circles.

11. A fibre optic interrogation system according to either one of claim 9 or 10, wherein each interrogation fibre (24,26) is arranged to direct radiation to a different detector (36,38).

12. A fibre optic interrogation system according to any one of claims 7 to 11, wherein the or each radiation detector (36,38) is a light detector for detecting light transmitted by the collection fibres.

13. The use of a fibre optic interrogation system according to claim 12 to detect diamonds.

14. The use of a fibre optic interrogation system according to any one of claims 1 to 6 in a diamond sorting apparatus.

15. The use of a fibre optic interrogation system according to claim 6 to sort particulate material (50) conveyed on the conveyer.

16. The use of a fibre optic interrogation system according to any one of claims 1 to 4 to pick up radiation emanating from a small zone only of a person's body, the first ends of the collection fibres (46) being arranged in an array such that each first end may pick up said radiation emanating from a small zone only of a person's body.

## Patentansprüche

1. Faseroptik-Abfragesystem zum Ermöglichen der Detektion von möglicherweise von bestimmten Zonen ausgehender Strahlung, mit mehreren Sammelfasern (46), wobei ein erstes Ende jeder Sammelfaser (46) zum Sammeln von Strahlung von einer bestimmten Zone angeordnet ist und die zweiten, entgegengesetzten Enden der Sammelfasern (46) in einem Muster angeordnet sind, das das einzelne Abfragen dieser zweiten Enden hinsichtlich der Strahlungsübertragung durch die betreffende Sammelfaser (46) ermöglicht, wobei das System ferner eine Abfrageeinrichtung (24,26) zum sukzessiven Abfragen benachbarter zweiter Enden der Sammelfasern aufweist, dadurch gekennzeichnet, daß die zweiten Enden derjenigen Sammelfasern (46), deren erste Enden benachbart sind, sich in dem Muster in nicht benachbarten Positionen befinden.

2. Faseroptik-Abfragesystem nach Anspruch 1, bei dem die zweiten Enden der Sammelfasern (46) in einem kreisförmigen Muster angeordnet sind, wobei die zweiten Enden derjenigen Sammelfasern (46), deren erste Enden benachbart sind, in dem kreisförmigen Muster um einen Winkel versetzt zueinander angeordnet sind.

3. Faseroptik-Abfragesystem nach Anspruch 2, bei dem die zweiten Enden derjenigen Sammelfasern (46), deren erste Enden benachbart sind, in dem kreisförmigen Muster einander ungefähr diametral gegenüberliegen.

4. Faseroptik-Abfragesystem nach Anspruch 1, bei dem die zweiten Enden der Sammelfasern (46) in einem aus zwei oder mehr Kreisen zusammengesetzten Muster angeordnet sind, wobei die zweiten Enden derjenigen Sammelfasern (46), deren erste Enden benachbart sind, in unterschiedlichen Kreisen relativ zueinander versetzt sind.

5. Faseroptik-Abfragesystem nach einem der vorhergehenden Ansprüche, bei dem die ersten Enden der Sammelfasern (46) in einer geraden Linie angeordnet sind.

6. Faseroptik-Abfragesystem nach Anspruch 5 in Kombination mit einer Fördereinrichtung, bei dem die ersten Enden der Sammelfasern (46) in einer geraden Linie angeordnet sind, die sich quer über die Breite der Fördereinrichtung erstreckt, so daß die jeder Sammelfaser (46) zugeordnete bestimmte Zone eine Zone der Fördereinrichtung ist, die eine lediglich geringe Breite aufweist, wobei die Fördereinrichtung derart angeordnet ist, daß sie bei Verwendung zu sortierendes Partikelmaterial (50) befördert.

7. Faseroptik-Abfragesystem nach einem der vorhergehenden Ansprüche, bei dem die Abfrageeinrichtung mindestens eine Abfragefaser (24,26) aufweist, die ein erstes Ende, welches in einer Kreisbahn an den zweiten Enden der Sammelfasern (46) vorbei bewegbar ist, um von den Sammelfasern übermittelte Strahlung zu sammeln, und ein zweites, entgegengesetztes Ende aufweist, das so angeordnet ist, daß es diese Strahlung zu einem geeigneten Strahlungsdetektor (36,38) leitet.

8. Faseroptik-Abfragesystem nach Anspruch 7, wobei die Abfrageeinrichtung zwei Abfragefasern (24,26) aufweist.

9. Faseroptik-Abfragesystem nach Anspruch 8, sofern auf Anspruch 2 rückbezogen, bei dem die ersten Enden der beiden Abfragefasern (24,26) um einen Winkel versetzt zueinander angeordnet sind, um winklig voneinander beabstandete zweite Sammelfaserenden abzufragen.

10. Faseroptik-Abfragesystem nach Anspruch 8, sofern auf Anspruch 4 rückbezogen, bei dem die Abfragefasern (24,26) unter derselben radialen Ausrichtung voneinander beabstandet und so angeordnet sind, daß sie sich in unterschiedlichen Kreisen befindende zweite Sammelfaserenden abfragen.

11. Faseroptik-Abfragesystem nach einem der Ansprüche 9 oder 10, bei dem jede Abfragefaser (24,26) derart angeordnet ist, daß sie Strahlung zu einem unterschiedlichen Detektor (36,38) lenkt.

12. Faseroptik-Abfragesystem nach einem der Ansprüche 7 bis 11, bei dem der oder jeder Strahlungsdetektor (36,38) ein Lichtdetektor zum Detektieren von von den Sammelfasern übertragenem Licht ist.

13. Verwendung eines Faseroptik-Abfragesystems nach Anspruch 12 zum Detektieren von Diamanten.

14. Verwendung eines Faseroptik-Abfragesystems gemäß einem der Ansprüche 1 bis 6 in einer Diamantenaussortiervorrichtung.

15. Verwendung eines Faseroptik-Abfragesystems gemäß Anspruch 6 zum Sortieren von Partikelmaterial (50), das auf der Fördereinrichtung befördert wird.

16. Verwendung eines Faseroptik-Abfragesystems gemäß einem der Ansprüche 1 bis 4 zum Aufnehmen von von einem lediglich kleinen Bereich des Körpers einer Person ausgehender Strahlung, wobei die ersten Enden der Sammelfasern (46) in einer Anordnung derart angeordnet sind, daß jedes erste Ende die von einem lediglich kleinen Bereich des Körpers einer Person ausgehende Strahlung aufnimmt.

## Revendications

1. Système d'interrogation à fibres optiques pour permettre la détection d'un rayonnement pouvant émaner de zones particulières, comprenant une multiplicité de fibres de collecte (46), une première extrémité de chaque fibre de collecte (46) étant agencé pour capter un rayonnement en provenance d'une zone particulière et les deuxièmes extrémités opposées des fibres de collecte (46) étant disposées selon une configuration qui permet d'interroger individuellement ces deuxièmes extrémités en ce qui concerne la transmission d'un rayonnement par la fibre de collecte correspondante (46), le système comprenant en outre des moyens d'interrogation (24, 26) pour interroger successivement des deuxièmes extrémités adjacentes des fibres de collecte, caractérisé en ce que les fibres de collecte (46) qui ont leurs premières extrémités adjacentes l'une à l'autre ont leurs deuxièmes extrémités disposées en des positions non adjacentes dans la configuration.

2. Système d'interrogation à fibres optiques selon la revendication 1, dans lequel les deuxièmes extrémités des fibres de collecte (46) sont disposées en une configuration circulaire, ces fibres de collecte (46) qui ont leurs premières extrémités adjacentes ayant leurs deuxièmes extrémités déplacées angulairement en les séparant l'une de l'autre dans la configuration circulaire.

3. Système d'interrogation à fibres optiques selon la revendication 2, dans lequel ces fibres de collecte (46) qui ont leurs premières extrémités adjacentes ont leurs deuxièmes extrémités situées en des positions sensiblement diamétralement opposées dans la configuration circulaire.

4. Système d'interrogation à fibres optiques selon la revendication 1, dans lequel les deuxièmes extrémités des fibres de collecte (46) sont disposées en une configuration comportant deux ou plusieurs cercles, ces fibres de collecte (46) qui ont leurs premières extrémités adjacentes ayant leurs deuxièmes extrémités décalées en quinconce les unes par rapport aux autres en des cercles différents.

5. Système d'interrogation à fibres optiques selon l'une quelconque des revendications précédentes, dans lequel les premières extrémités des fibres de collecte (46) sont disposées selon une ligne droite.

6. Système d'interrogation à fibres optiques selon la revendication 5, en combinaison avec un transporteur, dans lequel les premières extrémités des fibres de collecte (46) sont disposées selon une ligne droite s'étendant transversalement en travers de la largeur du transporteur de telle sorte que ladite zone particulière associée à chaque fibre de collecte (46) est une zone peu large seulement du transporteur, le transporteur étant disposé de façon à transporter, en utilisation, un matériau en particules (50) qui doit être trié.

7. Système d'interrogation à fibres optiques selon l'une quelconque des revendications précédentes, dans lequel les moyens d'interrogation comprennent au moins une fibre d'interrogation (24, 26) qui a une première extrémité pouvant se déplacer en un trajet circulaire au droit des deuxièmes extrémités des fibres de collecte (46) de façon à capter un rayonnement transmis par les fibres de collecte, et une deuxième extrémité opposée disposée pour diriger ce rayonnement vers un détecteur de rayonnement approprié (36, 38).

8. Système d'interrogation à fibres optiques selon la revendication 7, les moyens d'interrogation comprenant deux fibres d'interrogation (24, 26).

9. Système d'interrogation à fibres optiques selon la revendication 8, lorsqu'elle dépend de la revendication 2, dans lequel les deux fibres d'interrogation (24, 26) ont leurs premières extrémités déplacées angulairement l'une par rapport à l'autre de façon à interroger les deuxièmes extrémités de fibres de collecte angulairement espacées.

10. Système d'interrogation à fibres optiques selon la revendication 8, lorsqu'elle dépend de la revendication 4, dans lequel les fibres d'interrogation (24, 26) sont espacées en étant dans la même orientation radiale et sont agencées pour interroger des deuxièmes extrémités de fibres de collecte se trouvant dans des cercles différents.

11. Système d'interrogation à fibres optiques selon l'une ou l'autre des revendications 9 ou 10, dans lequel chaque fibre d'interrogation (24, 26) est disposée pour diriger le rayonnement vers un détecteur différent (36, 38).

12. Système d'interrogation à fibres optiques selon l'une quelconque des revendications 7 à 11, dans lequel le ou chaque détecteur de rayonnement (36, 38) est un détecteur de lumière pour détecter la lumière transmise par les fibres de collecte.

13. Utilisation d'un système d'interrogation à fibres optiques selon la revendication 12 pour détecter des diamants.

14. Utilisation d'un système d'interrogation à fibres optiques selon l'une quelconque des revendications 1 à 6 dans un appareil de tri des diamants.

15. Utilisation d'un système d'interrogation à fibres optiques selon la revendication 6, pour trier un matériau en particules (50) transporté sur le transporteur.

16. Utilisation d'un système d'interrogation à fibres optiques selon l'une quelconque des revendications 1 à 4 pour capter un rayonnement émanant d'une petite zone seulement du corps d'une personne, les premières extrémités des fibres de collecte (46) étant disposées selon un réseau de telle sorte que chaque première extrémité peut capter ledit rayonnement émanant d'une petite zone seulement du corps d'une personne.
